# EUROPEAN PATENT SPECIFICATION

(11) **EP 4 295 807 B1**
(45) Date of publication and mention of the grant of the patent: **13.08.2025**
(21) Application number: 22877761.1
(22) Date of filing: 31.03.2022
(51) Int. Cl.: A61C 7/08, B32B 27/08

(54) **MULTILAYER POLYMER SHEET AND DENTAL APPLIANCE**
MEHRSCHICHTIGE POLYMERFOLIE UND DENTALVORRICHTUNG
FEUILLE DE POLYMÈRE MULTICOUCHE ET APPAREIL DENTAIRE

(30) Priority: 09.10.2021 CN 202111177815
(43) Date of publication of application: 27.12.2023
(73) Proprietor: Shanghai Coherz Technology Co., Ltd, Shanghai 201314 (CN)
(72) Inventor: SUN, Yongfu, Pudong New District, Shangai (CN)
(74) Representative: Bayramoglu et al.
(86) International application number: PCT/CN2022/084235
(87) International publication number: WO 2023/056735

(56) References cited:
- EP-A1- 2 110 240
- EP-A1- 2 212 109
- EP-A2- 1 559 543
- WO-A1-2014/073824
- CN-A- 102 825 875
- CN-A- 110 709 028
- CN-A- 113 974 869
- CN-U- 213 167 278
- CN-U- 213 649 050
- US-A1- 2006 078 688
- US-A1- 2013 302 742

## Description

### TECHNICAL FIELD

The present disclosure belongs to the technical field of polymer materials, and relates to a multilayer polymer sheet and a dental appliance.

### BACKGROUND

Clear aligners are removable orthodontic appliances fabricated under computer-aided design and manufacturing, including a series of continuous transparent elastic devices which push teeth to move step by step in short step distance to achieve teeth alignment. These clear aligners are usually made from thermoplastic polymer sheets, by thermoforming, cutting and polishing process. During the treatment process, each pair of clear aligners will be replaced every 1 or 2 weeks and the entire treatment process can last for tens of months. At different stages of the treatment, only part of the teeth move, while other teeth acting as anchors. Under specified design rules, magnitude and duration of orthodontic force inside clear aligners are mainly determined by thermoplastic polymer sheets, so that the efficiency and satisfaction of orthodontic treatment will also largely depend on thermoplastic polymer sheets used.

Ideal sheets for clear aligners should offer excellent stress retention performance to provide enough force for tooth movement during 1 to 2 weeks of wearing. In addition, the sheets for clear aligners should be resistant to bite impact and stress cracking, avoiding destruction and breakage of the clear aligners during wearing. To provide aesthetic looks, the sheets for clear aligners should also be resistant to food contamination, and be easily cleaned and disinfected.

In response to the above requirements, materials for clear aligners have evolved from single-layer structure of single material to multilayer structure of multiple materials. The use of multiple materials in combination is conducive to making up for each component's deficiencies, thereby achieving excellent overall performance.

Align technology (Invisalign) was the first company to launch multilayer clear aligners. Patent US9655691B2 of Align technology discloses a dental appliance with a multilayer structure, including a hard copolyester inner layer, and first and second soft thermoplastic polyurethane (TPU) elastomer outer layers, where the hard copolyester inner layer is wrapped by the first and second soft TPU elastomer outer layers. The outer soft polyurethane (PU) elastomer has a flexural modulus of greater than 241.4 MPa, a Shore hardness range of 60 A to 85 D, and a thickness range of 25 µm to 100 µm. The first-layer and second-layer soft TPUs have a permanent compression set ratio of greater than 40% (70°C, 24 h), and the inner layer copolyester material has a stress degradation ratio of greater than 10% within 24 h at a humidity of 90% to 100%. According to clinical feedback, clear aligners made of this material is easy to be put on and taken off, and has a moderate orthodontic force and excellent wearing comfort. However, because a soft PU outer layer is used in the above structure, during use, the outer-layer material is easily damaged and stained, which affects the function and aesthetics.

Bay Materials, LLC (US10549511B2) provides a triple-layer polymer material with a sandwich structure, including two outer layers A and C and a middle layer B, where the outer layers A and C are thermoplastic copolyester and the middle layer B is a TPU elastomer. This structure can avoid staining of surface material while providing excellent stress retention performance. However, due to poor mechanical performance of the copolyester, the outer layer is prone to crazing and fracturing under stress. Studies have shown that clear aligners made of this material is also prone to surface damage, which may affect the use experience and may also affect the progress and the effect of the orthodontic treatment. EP2212109A1 relates to a method or process for adhering a polyamide part or layer to a polyester part or layer, and to multilayer constructions and multicomponent parts comprising a first part or layer made of a polyamide material and a part or layer made of a polyester material. The polyester material comprises a thermoplastic polyester comprising urethane linkages and/or a polyurethane elastomer and a thermoplastic polyester. EP1559543A2 discloses a transparent multilayer structure. The transparent multilayer structure comprises a first polyamide layer, an intermediate layer and a second polyamide layer. EP2120240A1 discloses a printed sterilizable laminate for aseptic packaging. The printed sterilizable laminate includes two films each including a core layer including ethylene vinyl alcohol copolymer, polymeric adhesive, or polyamide; first and second intermediate layers each including a polyamide; an outer layer including amorphous cyclic olefin copolymer, or a blend of amorphous cyclic olefin copolymer and at least one olefinic copolymer; an inner layer including olefinic copolymer, or a blend of an olefinic copolymer and amorphous cyclic olefin copolymer; and first and second tie layers adhering the intermediate layers to the outer and inner layers respectively; a printed image disposed on the outside surface of the first film, or the inside surface of the second film; and an adhesive that bonds the outer layer of the first coextruded film to the inner layer of the second coextruded film. An aseptic package, and a method of making an aseptic package are also disclosed. US2013/302742A1 discloses a dental appliance for positioning a patient's teeth. The dental appliance includes a removable orthodontic tooth positioning appliance having teeth receiving cavities shaped to directly receive at least some of the patient's teeth and apply a resilient positioning force to the patient's teeth. The appliance includes a hard polymer layer having a hard polymer layer elastic modulus disposed between a first soft polymer layer having a first soft polymer layer elastic modulus and a second soft polymer layer having a second soft polymer layer elastic modulus. The hard polymer layer elastic modulus is greater than each of the first soft polymer layer elastic modulus and the second soft polymer layer elastic modulus. At least one of the first soft polymer layer and the second soft polymer layer has a flexural modulus of greater than about 35,000 psi.

### SUMMARY

In order to solve the above problems and offer a prominent sheet material for a clear aligner, the present invention discloses a multilayer polymer sheet, a method and a dental appliance thereof.

Polyamide materials (PA, commonly known as nylon) have excellent mechanical and chemical performance, such as high tensile strength and excellent toughness, abrasion resistance, self-lubricating, oil resistance, and solvent resistance. Common PA materials such as PA6, PA66, or PA12 are opaque or translucent materials, which are not suitable for preparation of clear aligners. In addition, these materials have high water absorption, with a saturation of water absorption rate as high as 9% to 12%; and the mechanical performance of these materials in humid environment is greatly reduced. Transparent PAs are amorphous or micro-crystalline polymers with special structures. Molecular chain of an amorphous transparent PA usually includes a side group or a ring structure, such that the regularity of molecular chains is destroyed to cause non-crystallization, which does not affect the transmission of visible light. The crystalline region of micro-crystalline PA can only reach a nano-scale, which also does not affect the transmission of visible light. The above two mechanisms can achieve the transparency of PA materials. Transparent PAs do not affect the aesthetics and thus can be considered for preparation of clear aligners. Transparent PAs of different formulas have much different properties.

The present disclosure has found that, when used as a sheet material for clear aligners, a modified PA material can provide excellent stress retention performance and abrasion resistance. The modified PA material includes: (1) 36 mol% to 40 mol% of 4,4-methylenebis(2-methylcyclohexylamine); (2) 36 mol% to 40 mol% of an aromatic dicarboxylic acid, which is IPA and/or TPA; and (3) 20 mol% to 28 mol% of an alicyclic or aliphatic amino acid or lactam. A multilayer material based on such modified PA material exhibits excellent stress retention performance and abrasion resistance. In addition, such a multilayer material has a low surface friction coefficient, which is conducive to the wearing and removal of clear aligners and provides a prominent orthodontic effect and wearing experience overall.

Specifically, the objective of the present disclosure is achieved by the following technical solutions.

The present disclosure provides a multilayer polymer sheet, including an A-layer polymer and a B-layer polymer, where
the A-layer polymer is an amorphous polyamide (PA);
the B-layer polymer is at least one selected from the group consisting of a TPU, an ethylene-vinyl acetate (EVA) copolymer, and a copolyester; and
the B-layer polymer is located between two layers of the A-layer polymer.

The A-layer polymer is obtained through polymerization of the following substances: (1) 36 mol% to 40 mol% of 4,4-methylenebis(2-methylcyclohexylamine); (2) 36 mol% to 40 mol% of an aromatic dicarboxylic acid, which is 1,3-benzenedicarboxylic acid (IPA) and/or 1,4-benzenedicarboxylic acid (TPA); and (3) 20 mol% to 28 mol% of an alicyclic or aliphatic amino acid or lactam.

As an embodiment of the present disclosure, preferably, the amorphous PA has a Shore hardness range of 45 D to 87 D.

As an embodiment of the present disclosure, preferably, a structural unit of the A-layer polymer includes 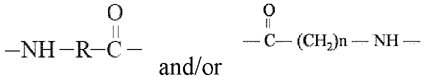 , where R is a C₅-C₃₅ branched or cycloaliphatic hydrocarbon and n is 4 to 11.

As an embodiment of the present disclosure, preferably, the A-layer polymer has a relative viscosity of greater than 1.45, and the relative viscosity is tested in a 0.5% m-cresol solution at 20°C according to an ISO 307 standard.

In some embodiments, preferably, the aromatic dicarboxylic acid is a mixture of IPA and TPA, where an amount of TPA is 50% or less of a total amount of the aromatic dicarboxylic acid. In the system of the present disclosure, IPA and TPA are used in combination to avoid excessive regularity of molecular chains, preventing crystallization which will affect the transparency of final product.

As an embodiment of the present disclosure, preferably, the multilayer polymer sheet has a total thickness of 400 µm to 1500 µm and a tensile modulus of greater than 800 MPa, wherein the tensile modulus is determined according to the standard GB/T 1040.3-2006.

As an embodiment of the present disclosure, preferably, the TPU is a polyether or polyester based PU, and has a shore hardness range of 40 D to 85 D.

The present disclosure further provides a preparation method of the multilayer polymer sheet described above, where the method includes laminating the A-layer polymer and the B-layer polymer through in-mold co-extrusion to obtain the multilayer polymer sheet.

The present disclosure also relates to a dental appliance made of the multilayer polymer sheet described above, where the dental appliance is conformal to one or more teeth.

Compared with the prior art, the present disclosure has the following benefits:
1) A multilayer material based on the specially-modified PA material of the present disclosure exhibits excellent stress retention performance and abrasion resistance.
2) A multilayer material based on the specially-modified PA material of the present disclosure has a low surface friction coefficient, which is conducive to the wearing and removal of an orthodontic appliance and provides a prominent orthodontic effect and wearing experience overall.
3) A multilayer material based on the specially-modified PA material of the present disclosure has better flexibility and orthodontic devices made from it is easier to be worn and removed than that made from single-layer polymer sheet.
4) A multilayer material based on the specially-modified PA material of the present disclosure is resistant to corrosion of ethanol, so the appliance made of the multilayer material can be disinfected with medical alcohol, which is benificial to the health of users.

### BRIEF DESCRIPTION OF THE DRAWINGS

Other features, objectives, and advantages of the present disclosure will become more apparent by reading the detailed description of non-limiting embodiments with reference to the following accompanying drawings.
FIG. 1 shows test results of stress retention performance of single-layer products;
FIG. 2 shows test results of stress retention performance of comparative examples; and
FIG. 3 shows test results of stress retention performance of examples.

### DETAILED DESCRIPTION OF THE EMBODIMENTS

The present disclosure is described in detail below with reference to examples. The following examples will help those skilled in the art to further understand the present disclosure, but do not limit the present disclosure in any way. Note that examples 3-5 are reference examples not according to the invention.

Compositions of modified PAs EPA-1 and EPA-2 involved in the following examples are as follows:
(1) EPA-1: 48.2 kg of 4,4-methylenebis(2-methylcyclohexylamine) (molecular weight: 238.42), 17.0 kg of TPA (molecular weight: 166.131), 17.0 kg of IPA (molecular weight: 166.131), 28.8 kg of dodecalactam (molecular weight: 197.317), 30 kg of deionized water, and 11 g of hypophosphorous acid (50% solution). The above substances were pre-mixed in a vessel, and a resulting mixture was passivated with nitrogen, then heated to 230°C, then transferred to a reaction vessel, heated to 295°C under stirring, and kept at 20 bar for 4 h; the pressure was then reduced to an atmospheric pressure, and exhaust was conducted; a resulting melt was allowed to flow out to a water bath and cooled, and granulation was conducted while cooling; and resulting particles were dehumidified and dried until a moisture content was lower than 0.05%, and then could be used for extrusion to produce a sheet. At 20°C, a viscosity of dried particles in a 0.5% m-cresol solution was 1.52.
(2) EPA-2: 48.2 kg of 4,4-methylenebis(2-methylcyclohexylamine) (molecular weight: 238.42), 34.0 kg of IPA (molecular weight: 166.131), 23.2 kg of 1,8-aminooctanoic acid (molecular weight: 159.226), 25 kg of deionized water, and 8 g of hypophosphorous acid (50% solution). Reaction conditions of EPA-2 were consistent with the reaction conditions of EPA-1. Resulting particles needed to be dehumidified and dried until a moisture content was lower than 0.05%, and then could be used for extrusion to produce a sheet. At 20°C, a viscosity of dried particles in a 0.5% m-cresol solution was 1.46.

Multilayer polymer sheets of the examples and comparative examples were prepared through co-extrusion, and a specific process was as follows: pellets of A-layer polymer and pellets of B-layer polymer were firstly dehumidified and dried for 8 hours or more to achieve moisture content of lower than 0.05%; and then the two pellets were fed into two seperate extruders and subjected to extrusion molding. Melts of the A-layer polymer and B-layer polymer were laminated directly inside the die to form a multilayer structure which was cooled and shaped by a set of shaping rollers to required thickness.

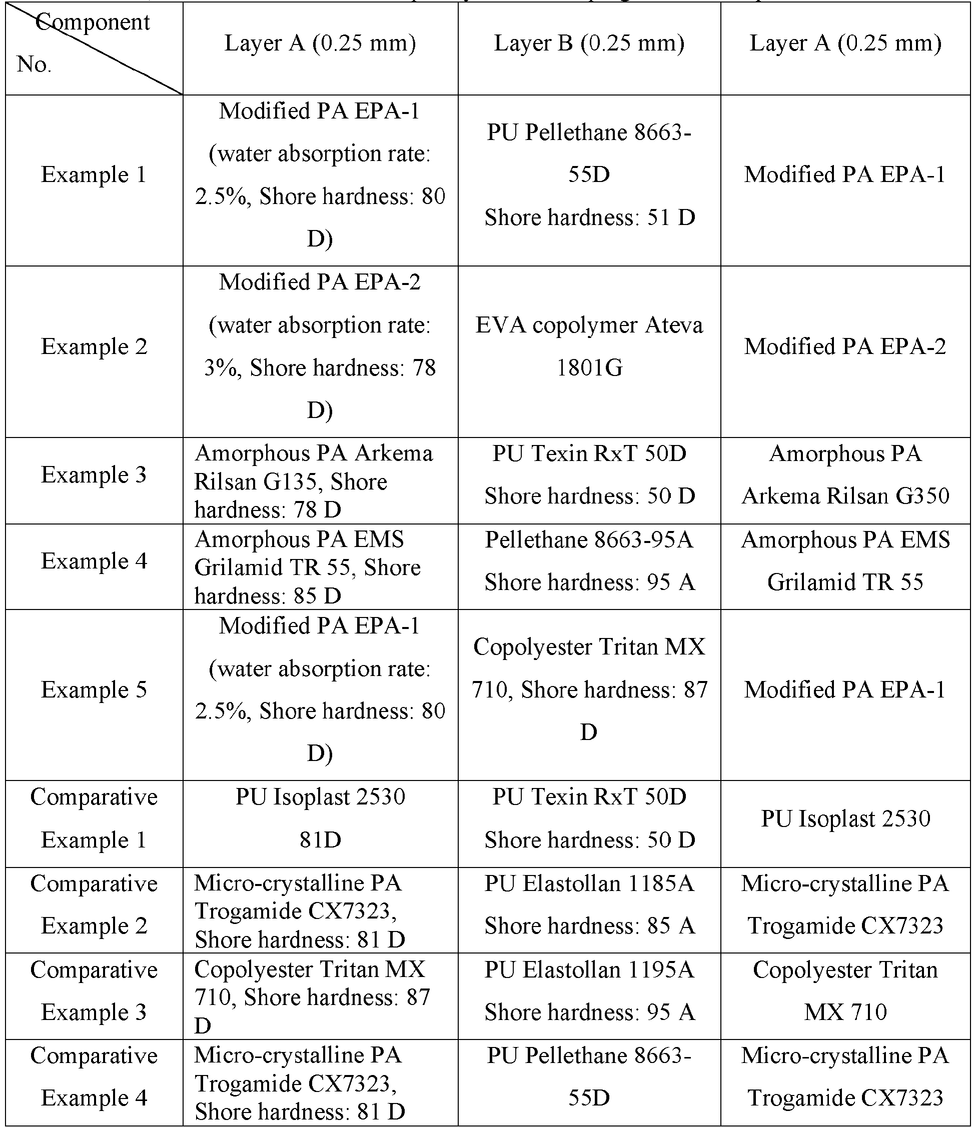

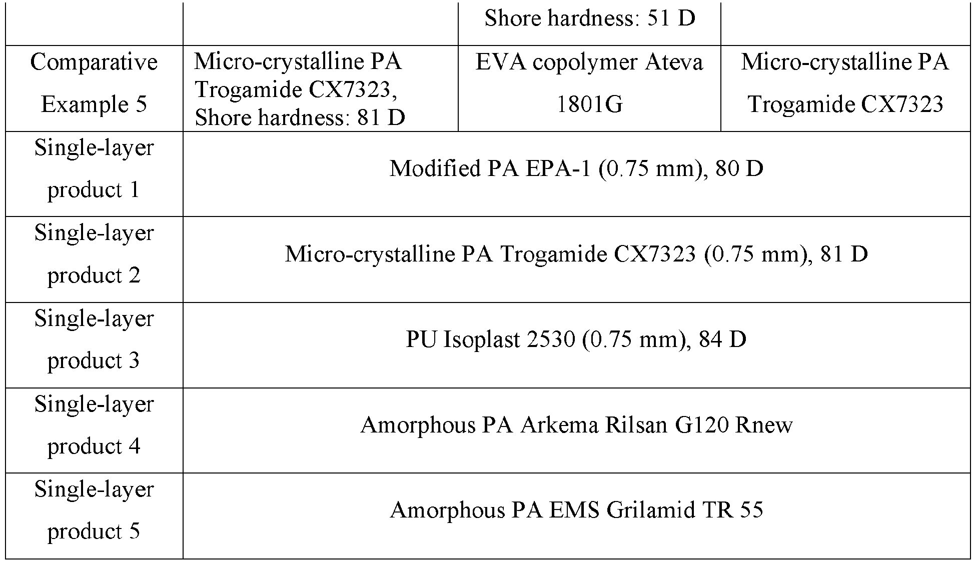

Performance test results were shown in Table 2 below:

**Table 2**

| | Comparative Examples | | | | | Examples | | | | | Single-layer products | | | | |
|---|---|---|---|---|---|---|---|---|---|---|---|---|---|---|---|
| | 1 | 2 | 3 | 4 | 5 | 1 | 2 | 3 | 4 | 5 | 1 | 2 | 3 | 4 | 5 |
| Tensile modulus , (Mpa) | 1051 | 724 | 106 7 | 933 | 878 | 110 5 | 101 9 | 111 2 | 138 5 | 159 0 | 194 6 | 140 0 | 222 6 | 148 0 | 220 0 |
| Flexural modulus , (Mpa) | 1419 | 106 7 | 139 5 | 108 0 | 101 2 | 163 3 | 142 1 | 126 0 | 152 2 | 172 0 | 167 3 | 170 0 | 240 9 | 134 0 | 198 0 |
| Tear strength (KN/m) | 179. 12 | 159. 4 | 133 | 183. 2 | 174. 3 | 182. 2 | 171. 3 | 177. 6 | 180. 1 | 219. 7 | 227 | 198 | 22.0 6 | 189 | 214. 7 |
| Abrasio n resistan ce ((1,000 r, CS10)/ mg) | 15 | 18 | 140 | 18 | 18 | 12 | 10 | 16 | 8 | 10 | 12 | 18 | 15 | 12 | 8 |
| 24h Stress retention ratio (%) | 18* | 46 | 65 | 49 | 42 | 78 | 74 | 62 | 55 | 71 | 72 | 38 | 33 | 58 | 52 |
| Ethanol resistan ce | Goo d | Poo r | Goo d | Poo r | Poo r | Goo d | Goo d | Poo r | Poo r | Goo d | Goo d | Poo r | Goo d | Poo r | Poo r |

| | | | | | | | | | | | | | | | |
|---|---|---|---|---|---|---|---|---|---|---|---|---|---|---|---|
| * For comparative Example 1, the tensile stress decreased quickly and severely, and only a 6 hours of stress degradation was tested. | | | | | | | | | | | | | | | |

The tensile modulus was tested accordingto "GB/T 1040.3-2006 *Determination of Tensile Properties of Plastics",* where a tensile speed of a device was set to 50 mm/min; and type-5 samples were used.

The flexural modulus of was tested by according to "GB/T 9341-2008 *Determination of Flexural Properties of Plastics".*

The tear strength was tested according to protocal (a) of method B in "GB/T 529-2008 *Determination of Tear Strength of Vulcanized Rubber or Thermoplastic Rubber",* where a sample was prepared according to 5.1.2 in the standard, adapting actual thickness of the sample and with stretching speed of 500 ± 50 mm/min.

The abrasion resistance of sheet material was tested according to "GB/T 5478-2008 *Test Method of Rolling Wear of plastics",* where a CS10 wearing wheel was used to measure the value after 1,000 cycles of abrasion.

The stress retention performance was tested as follows: The same stripes as used in tensile modulus test were taken. The stripe sample was stretched to a strain of 101.5%and maintained for 24 hours. An attenuation curve of a tensile force on the stripe sample during this period of time was recorded. The above test was conducted in a 37°C water bath.

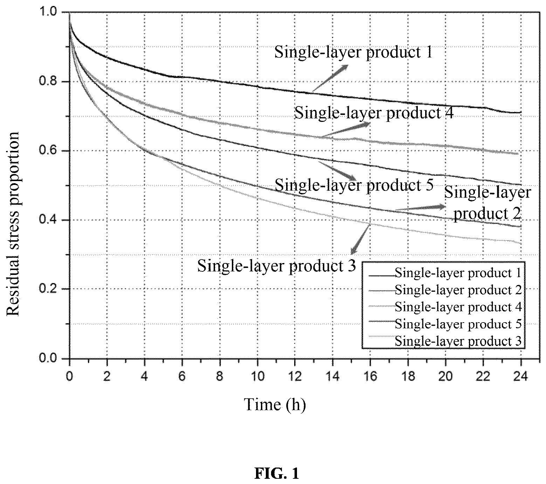

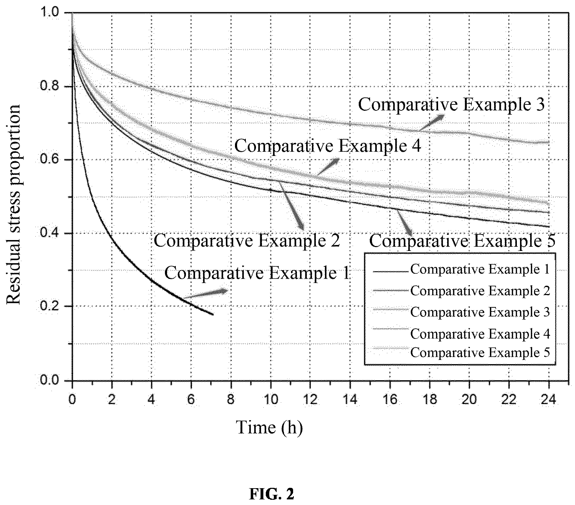

FIG. 1, FIG. 2, and FIG. 3 are contrast schematic diagrams of stress retention ratios of examples, comparative examples, and single-layer samples, respectively; and Comparative Examples 1, 2, and 3 are similar examples in patent US10549511B2. Table 1 shows the structural composition of the material in each comparative example. In Comparative Example 1, a triple-layer PU structure was adopted, where the surface layers are hard PU and the inner layer is soft PU. FIG. 2 shows test results of stress degradation of materials, and it can be seen from FIG. 2 that the material in Comparative Example 1 undergoes severe stress degradation, and just 6 hours later, the residual stress is only 18% of its initial stress. The single-layer product 3 was made of the hard PU same with the outer layer of Comparative Example 1, and it can be seen from FIG. 1 that this material itself undergoes severe stress degradation, and when this material is used to prepare a multilayer material, the stress degradation is further deteriorated.

Triple-layer sheets were prepared with a micro-crystalline polyamide material in Comparative Examples 2, 4, and 5 seperately, and single-layer product 2 was also prepared from the same micro-crystalline polyamide. Different materials were used for the intermediate layers in Comparative Examples 2, 4, and 5. It can be seen from FIG. 2 that the single-layer micro-crystalline PA sheet undergoes severe stress degradation, and after 24 h stress degradation test, the residual stress inside the polymer sheet is only 38% of the initial stress. The stress degradation of the triple-layer sheets in Comparative Examples 2, 4, and 5 is slightly lower than that of single-layer product 2, and after 24 h stress degradation test, residual stress of the three sheets were 46%, 49%, and 42% of their initial stress respectively. Despite what kind of intermediate polymers used, there seems to be no difference of their stress retention performance. A micro-crystalline PA molecular chain has no branched chain, and the molecular chain structure is regular, which facilitates crystallization. However, due to a small crystalline region, the micro-crystalline PA does not affect the transparency of a material. Therefore, the micro-crystalline PA can be used in production of an invisible orthodontic appliance. Stuiesof the micro-crystalline PA by inventors show that the stress degradation of this material is relatively fast, which is similar to that of hard PU (such as the single-layer product 3). It is speculated that the presence of micro-crystalline region leads to fast stress degradation. In addition, this micro-crystalline PA is not resistant to ethanol, therefore it cannot be disinfected with 75% ethanol solution, which is not conducive to the disinfection for a wearer.

A triple-layer sheet was prepared with a copolyester in Comparative Example 3. It can be seen from FIG. 2 that the sheet in this example undergoes small stress degradation, after a 24 h stress degradation test, the residual stress of the sheet in Comparative Example 3 is 65% of its initial stress. It should be noted that the copolyester material has poor abrasion resistance performance. Table 2 shows that abrasion value of this material under Taber wear test is significantly higher than that of other samples and high wear value usually means that the material is susceptible to worn out and crack during use. Moreover, under continuous stress, the material is prone to crazes, resulting in the failure of mechanical performance of the material. These two drawbacks may affect the progress of orthodontic treatment.

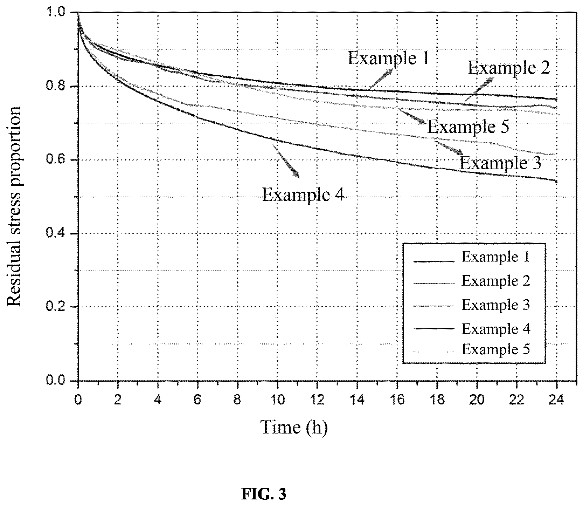

In Examples 1 and 2, modified polyamide EPA-1 and EPA-2 were used to prepare triple-layer sheets. It can be seen from FIG. 3 that the triple-layer sheets prepared in the two examples undergo very small stress degradation; and after a 24 h stress degradation test, residual stress of the sheets in Examples 1 and 2 are 78% and 74% of their initial stress, respectively. A single-layer sheet made of the modified polyamide EPA-1 undergoes relatively small stress degradation, and after a 24 h stress degradation test, the residual stress in the EPA-1 single-layer sheet is 72% of its initial stress.

In Reference Examples 3 and 4, two commercially available amorphous PAs were used to prepare multilayer sheets. The single-layer product 4 and the single-layer product 5, were prepared from the same two amorphous PAs respectively. After a 24 h stress degradation test, residual stress in the two sheets of Examples 3 and 4 are 62% and 55% of their initial stress, respectively; and after a 24 h stress degradation test, residual stress in the corresponding single-layer product 4 and single-layer product 5 are 58% and 52% of their initial stress, respectively. The stress degradation of the two commercially available amorphous PAs is more severe than that of Examples 1 and 2, but both are better than that of Comparative Examples 2, 4, and 5.

In Reference Example 5, a multilayer sheet was prepared through co-extrusion of the modified PA EPA-1 and the copolyester Tritan MX710. It can be seen from FIG. 3 that this combined sheet showed excellent stress retention performance; and after a 24 h stress degradation test, the residual stress in the sheet of Reference Example 5 is 71% of its initial stress. As EPA-1 and Tritan MX710 both have high hardness, the polymer sheet of Reference Example 5 feels hard and is less comfortable than sheets in other examples. However, these two polymers have similar processing temperatures, which brings convenience to production and processing, allows a stable production process, and is cost effective.

In summary, the sheets in the examples of the present disclosure have low stress degradation rate and superior abrasion resistance, and are ideal sheets for orthodontic appliances.

The specific examples of the present disclosure are described above. It should be understood that the present disclosure is not limited to the above specific implementations, and a person skilled in the art can make various variations or modifications within the scope of the claims without affecting the essence of the present disclosure.

## Claims

1. A multilayer polymer sheet, comprising an A-layer polymer and a B-layer polymer, wherein
the A-layer polymer is an amorphous polyamide (PA);
the B-layer polymer is at least one selected from the group consisting of a thermoplastic polyurethane (TPU), an ethylene-vinyl acetate (EVA) copolymer, and a copolyester; and
the B-layer polymer is located between two layers of the A-layer polymer; **characterized in that** the A-layer polymer is obtained through polymerization of the following substances: (1) 36 mol% to 40 mol% of 4,4-methylenebis(2-methylcyclohexylamine); (2) 36 mol% to 40 mol% of an aromatic dicarboxylic acid, which is 1,3-benzenedicarboxylic acid (IPA) and/or 1,4-benzenedicarboxylic acid (TPA); and (3) 20 mol% to 28 mol% of an alicyclic or aliphatic amino acid or lactam.

2. The multilayer polymer sheet according to claim 1, wherein the amorphous PA has a Shore hardness range of 45 D to 87 D.

3. The multilayer polymer sheet according to claim 1, wherein a structural unit of the A-layer polymer comprises 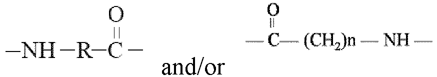 , wherein R is a C₅-C₃₅ branched or cycloaliphatic hydrocarbon and n is 4 to 11.

4. The multilayer polymer sheet according to claim 1, wherein the aromatic dicarboxylic acid is a mixture of the IPA and the TPA, and an amount of the TPA is 50% or less of a total amount of the aromatic dicarboxylic acid.

5. The multilayer polymer sheet according to claim 1, wherein the A-layer polymer has a relative viscosity of greater than 1.45, and the relative viscosity is tested in a 0.5% m-cresol solution at 20°C according to an ISO 307 standard.

6. The multilayer polymer sheet according to claim 1, wherein the multilayer polymer sheet has a total thickness of 400 µm to 1,500 µm and a tensile modulus of greater than 800 MPa, wherein the tensile modulus is determined according to the standard GB/T 1040.3-2006.

7. The multilayer polymer sheet according to claim 1, wherein the TPU is a polyether or polyester based polyurethane (PU), and has a Shore hardness range of 40 D to 85 D.

8. A preparation method of the multilayer polymer sheet according to any one of claims 1 to 7, comprising laminating the A-layer polymer and the B-layer polymer through in-mold co-extrusion to obtain the multilayer polymer sheet.

9. A dental appliance made of the multilayer polymer sheet according to any one of claims 1 to 8, wherein the dental appliance is conformal to one or more teeth.

## Patentansprüche

1. Mehrschichtige Polymerfolie, umfassend ein A-Schicht-Polymer und ein B-Schicht-Polymer, wobei
das A-Schicht-Polymer ein amorphes Polyamid (PA) ist,
das B-Schicht-Polymer mindestens eins der Materialien, ausgewählt aus der Gruppe, bestehend aus einem thermoplastischen Polyurethan (TPU), einem Ethylen-Vinylacetat(EVA)-Copolymer und einem Copolyester ist, und
das B-Schicht-Polymer zwischen zwei Schichten des A-Schicht-Polymers befindlich ist,
**dadurch gekennzeichnet, dass** das A-Schicht-Polymer durch Polymerisation der folgenden Substanzen gewonnen wird: (1) 36 Mol-% bis 40 Mol-% von 4,4-Methylenbis(2-Methylcyclohexylamin); (2) 36 Mol-% bis 40 Mol-% einer aromatischen Dicarbonsäure, die 1,3-Benzoldicarbonsäure (IPA) und/oder 1,4-Benzoldicarbonsäure (TPA) ist, und (3) 20 Mol-% bis 28 Mol-% einer alicyclischen oder aliphatischen Aminosäure oder eines Lactams.

2. Mehrschichtige Polymerfolie nach Anspruch 1, wobei das amorphe PA einen Shore-Härtebereich von 45 D bis 87 D aufweist.

3. Mehrschichtige Polymerfolie nach Anspruch 1, wobei eine Struktureinheit von Luxembourg des A-Schicht-Polymers 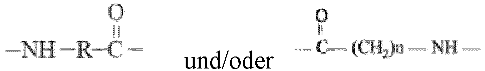 umfasst, wobei Rein C₅-C-₃₅-verzweigter oder cycloaliphatischer Kohlenwasserstoff ist und n 4 bis 11 ist.

4. Mehrschichtige Polymerfolie nach Anspruch 1, wobei die aromatische Dicarbonsäure eine Mischung aus IPA und TPA ist und eine Menge an TPA 50 % oder weniger einer Gesamtmenge der aromatischen Dicarbonsäure beträgt.

5. Mehrschichtige Polymerfolie nach Anspruch 1, wobei das A-Schicht-Polymer eine relative Viskosität von mehr als 1,45 aufweist und die relative Viskosität in einer 0,5%igen m-Cresollösung bei 20 °C gemäß einem ISO-307-Standard getestet ist.

6. Mehrschichtige Polymerfolie nach Anspruch 1, wobei die mehrschichtige Polymerfolie eine Gesamtdicke von 400 µm bis 1.500 µm und einen Zugmodul von mehr als 800 MPa aufweist, wobei der Zugmodul gemäß dem Standard GB/T 1040.3-2006 bestimmt ist.

7. Mehrschichtige Polymerfolie nach Anspruch 1, wobei das TPU ein Polyurethan auf Polyether- oder Polyesterbasis (PU) ist und einen Shore-Härtebereich von 40 D bis 85 D aufweist.

8. Verfahren zur Herstellung der mehrschichtigen Polymerfolie nach einem der Ansprüche 1 bis 7, umfassend das Laminieren des A-Schicht-Polymers und des B-Schicht-Polymers durch In-Mold-Co-Extrusion, um die mehrschichtige Polymerfolie zu erhalten.

9. Zahnärztliche Vorrichtung, bestehend aus der mehrschichtigen Polymerfolie nach einem der Ansprüche 1 bis 8, wobei die zahnärztliche Vorrichtung mit einem oder mehreren Zähnen konform ist.

## Revendications

1. Feuille de polymère multicouche, comprenant un polymère de couche A et un polymère de couche B, dans laquelle
le polymère de couche A est un polyamide amorphe (PA) ;
le polymère de couche B est au moins un polymère choisi dans le groupe constitué d'un polyuréthane thermoplastique (TPU), un copolymère d'éthylène-acétate de vinyle (EVA) et un copolyester ; et
le polymère de couche B est situé entre deux couches du polymère de couche A ;
**caractérisée en ce que** le polymère de couche A est obtenu par polymérisation des substances suivantes : (1) 36 % en moles à 40 % en moles de 4,4-méthylènebis(2-méthylcyclohexylamine) ; (2) 36 % en moles à 40 % en moles d'un acide dicarboxylique aromatique, qui est l'acide 1,3-benzènedicarboxylique (IPA) et/ou l'acide 1,4-benzènedicarboxylique (TPA) ; et (3) 20 % en moles à 28 % en moles d'un aminoacide ou lactame alicyclique ou aliphatique.

2. Feuille de polymère multicouche selon la revendication 1, dans laquelle le PA amorphe présente une plage de dureté de 45 D à 87 D.

3. Feuille de polymère multicouche selon la revendication 1, dans laquelle une unité structurelle du polymère de couche A comprend 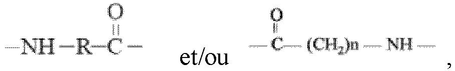 dans laquelle R est un hydrocarbure ramifié ou cycloaliphatique en C₅-C₃₅ et n est 4 à 11.

4. Feuille de polymère multicouche selon la revendication 1, dans laquelle l'acide dicarboxylique aromatique est un mélange de l'IPA et du TPA, et une quantité du TPA est de 50% ou moins par rapport à une quantité totale de l'acide dicarboxylique aromatique.

5. Feuille de polymère multicouche selon la revendication 1, dans laquelle le polymère de couche A présente une viscosité relative supérieure à 1,45, et la viscosité relative est testée dans une solution de m-crésol à 0,5% à 20°C conformément à une norme ISO 307.

6. Feuille de polymère multicouche selon la revendication 1, dans laquelle la feuille polymère multicouche présente une épaisseur totale de 400 µm à 1500 µm et un module de traction supérieur à 800 MPa, dans laquelle le module de traction est déterminé conformément à la norme GB/T 1040.3-2006.

7. Feuille de polymère multicouche selon la revendication 1, dans laquelle le TPU est un polyuréthane à base de polyéther ou de polyester (PU), et présente une plage de dureté Shore de 40 D à 85 D.

8. Procédé de préparation de la feuille de polymère multicouche selon l'une quelconque des revendications 1 à 7, comprenant la stratification du polymère de couche A et du polymère de couche B par co-extrusion en moule pour obtenir la feuille de polymère multicouche.

9. Appareil dentaire constitué de la feuille de polymère multicouche selon l'une quelconque des revendications 1 à 8, dans lequel l'appareil dentaire est conforme à une ou plusieurs dents.
